# EUROPÄISCHE PATENTSCHRIFT

(11) **EP 1 152 657 B1**
(45) Veröffentlichungstag und Bekanntmachung des Hinweises auf die Patenterteilung: **12.11.2003**
(21) Anmeldenummer: 00910537.0
(22) Anmeldetag: 18.02.2000
(51) Int. Cl.: A01K 31/16, B65B 23/06, B65G 17/36

(54) **AUFNAHMEVORRICHTUNG FÜR GEGENSTÄNDE, INSBESONDERE ZUR AUFNAHME VON EIERN**
DEVICE FOR RECEIVING OBJECTS, ESPECIALLY EGGS
DISPOSITIF RECEPTEUR D'OBJETS, NOTAMMENT D'OEUFS

(30) Priorität: 19.02.1999 DE 19906916
(43) Veröffentlichungstag der Anmeldung: 14.11.2001
(73) Patentinhaber: Kreyer, Rudolf, 49324 Melle (DE)
(72) Erfinder: Kreyer, Rudolf, 49324 Melle (DE)
(74) Vertreter: Lippert, Stachow, Schmidt & Partner
(86) Internationale Anmeldenummer: DE0000459
(87) Internationale Veröffentlichungsnummer: WO00048458

(56) Entgegenhaltungen:
- EP-A- 0 368 414
- WO-A-93/01710
- NL-A- 8 002 232

## Beschreibung

Die Erfindung betrifft eine mit einem Vertikalförderer (Elevator) verbindbare Aufnahmevorrichtung für Eier, die an den vertikalförderer übergeben werden, mit Endelementen, die an den voneinander weg gerichteten Außenseiten über Verbindungsmittel mit einem in dem Vertikalförderer umlaufenden Zugmittelgetriebe verbindbar sind und miteinander über einen sich in Längserstreckungsrichtung der Aufnahmevorrichtung erstreckenden Längssteg verbunden sind, an dem mindestens ein Quersteg vorgesehen ist, der sich im wesentlichen quer zu dem Längssteg und von diesem nach vorne erstreckt, wobei an der als Auflagefläche für ein Ei dienenden Ober- und der Unterseite des Querstegs eine bogenförmige, im wesentlichen konkave nach unten bzw. nach oben verlaufende Ausnehmung vorgesehen ist und der Quersteg etwa so lang ist wie ein Ei.

Derartige Aufnahmevorrichtungen sind aus den EP 0 368 414, WO 93/01710 und NL 800 22 32 bekannt.

Üblicherweise sind Legebatterien mit mehreren Etagen ausgestattet und die Eier müssen von den vor jeder Etage querlaufenden Transportbändern über einen Eier-Kollektor aus den Etagen einer Batterie aufgesammelt und nach unten auf ein einheitliches Quertransportsystem befördert werden, welches die Eier an die Abpack- oder Sortiermaschine weiterleitet.

Die Eier werden von den Eier-Kollektoren oder Querförderern an einen Elevator übergeben, der die Eier aus den oberen Etagen auf die auf Bodenniveau gelegenen Querförderbänder transportiert. Der Elevator nimmt die Eier aus den verschiedenen Etagen der Legebatterie auf.

Die aus dem Stand der Technik bekannten Aufnahmevorrichtungen, die auch als Becher bezeichnet werden, werden in Eier-Transportsystemen von Legebatterien für den Transport der Eier aus den Etagen einer Batterie in eine andere Transportebene eingesetzt. Die Becher sind regelmäßig als Metallteile ausgebildet, die - in der Seitenansicht - ein C-förmiges Profil aufweisen. Die Eier werden beim Transport in dem C-Profil aufgenommen, welches das Ei klammerartig umschließt. Die Querstege sind etwas länger als ein quer zu den Querstegen liegendes Ei.

Die Eier rollen in dem Eier-Transportsystem aus den Käfigen auf die Längs-Sammelbänder. Über Lift- bzw. Kollektorsysteme und Eier-Querförderer erfolgt der weitertransport der Eier.

Die Übergabe der Eier auf den Elevator (Becherwerk) erfolgt durch eine spezielle Dosiereinrichtung. Die Dosiereinrichtung besteht aus mehreren, parallel zueinander auf einer angetriebenen Welle drehfest befestigten Scheiben, deren Dicke etwa 3 mm beträgt. Die Scheiben weisen jeweils eine keilförmige Ausnehmung auf, deren Größe so gewählt ist, dass ein Ei quer liegend in der Ausnehmung auf den Scheiben aufnehmbar ist und bei der Drehung der Dosiereinrichtung von dem Förderband in das Becherwerk transportiert wird. Die Dosiereinrichtung stellt so sicher, dass immer nur die gewünschte Anzahl von Eiern von dem Förderband in Querrichtung an die Becher übergeben wird. Jede Etage einer Legebatterie ist mit einer derartigen Dosiereinrichtung versehen. Die Ausnehmungen der Dosiereinrichtungen verschiedener Ebenen sind relativ zueinander in einem Winkel versetzt angeordnet, so dass die Eier einer vorgegebenen Ebene immer nur an bestimmte Becher übergeben werden, um eine gleichmäßige Kapazitätsauslastung der Becher zu ermöglichen. Die Dosiereinrichtungen und der Elevator sind so abgestimmt, dass jeder Etage - in vorgegebenen Abständen - bestimmte Becher zugeordnet sind. Dadurch wird die mehrfache Befüllung eines Bechers durch Eier aud verschiedenen Etagen verhindert. Typischerweise sind die Becher in vorgegebenen Abständen an dem Elevator farblich codiert und den entsprechend farblich ausgestalteten Etagen zugeordnet.

Die Dosiereinrichtung bewirkt, dass im Idealfall nur so viele Eier an den Elevator-Becher übergeben werden, wie dieser aufnehmen und sicher transportieren kann. Teilweise kann es jedoch vorkommen, dass in Stoßzeiten ein Becher bereits mit mehreren Eiern befüllt ist und die Dosiereinrichtung ein Ei an den Becher übergibt, welches dann wegen des Platzmangels nicht mehr ordnungsgemäß in dem Becher aufgenommmen werden kann und unter Umständen herausfällt.

Die Dosiereinrichtungen sind regelungstechnisch aufwändig und kompliziert im Aufbau. Insbesondere bei großen, beispielsweise 8-stöckigen Legebatterien müssen zwei Kreisläufe wegen des hohen Steueraufwandes getrennt ausgebildet werden. Da jeweils nur ein entsprechender Becher einer Etage zugeordnet ist, kann es darüber hinaus zu einer nicht optimalen Auslastung des Elevators kommen. Wenn nämlich an einer Etage besonders viele Eier zum Weitertransport anstehen, dagegen an einer darüber liegenden Etage ein Mangel an Eiern besteht, können die Kapazitäten der Etage mit Eiermangel nicht ausgenutzt werden, um den Kapazitätsengpass an der Etage mit einem Eierüberschuss auszugleichen. Schließlich werden Eier teilweise durch die Dosiereinrichtung zerstört, wenn sie seitlich auf die schmalen Scheiben der Dosiereinrichtung prallen.

Der Erfindung liegt das Problem zugrunde, eine aus dem Stand der Technik bekannte Aufnahmevorrichtung derart weiter zu entwickeln, dass der Aufbau und die notwendige Steuerung für die übergabe der Eier vereinfacht wird.

Erfindungsgemäß wird diese Aufgabe dadurch gelöst, dass der Quersteg zumindest an seinem vorderen Ende als verbreitexte Prallwand ausgebildet ist, die eine Beschädigung der Eier im Betrieb verhindert und eine selbstregelnde Übergabe in den Vertikalförderer ohne Dosiereinrichtung ermöglicht.

Die erfindungsgemäße Aufnahmevorrichtung, die im folgenden als Becher bezeichnet wird, wird in vordefinierten Abschnitten mit den an beiden Endelementen außenseitig vorgesehenen und vorzugsweise als Verbindungsstifte ausgebildeten Verbindungselementen in dem vorzugsweise als Hohlbolzenketten ausgebildeten Zugmittelgetriebe angeordnet. Die Becher laufen dann mit dem Zugmittelgetriebe um. Die konkaven Ausnehmungen stellen sicher, dass die Eier bei der Übergabe von dem Querförderer an den Elevator einfach in den Becher einrollen, ohne dass die Eier beschädigt werden. Gleichzeitig wird durch die konkave - in der Seitenansicht im wesentlichen C-förmige - Wölbung der Ausnehmung sicher verhindert, dass das Ei ungewollt aus dem Becher herausrollt. Der vorderseitige, nasenförmige Vorsprung des Querstegs, der aufgrund der Wölbung an der von dem Elevator abgewandten Ende ausgebildet ist, fungiert zudem als Prallwand, gegen den ein Ei im Betrieb auch mit der Seite anschlagen kann, ohne zerstört zu werden. Diese ist inbesondere dann von Bedeutung, wenn sich bereits ein Ei in dem Becher befindet. Die im Verhältnis zum Stand der Technik kürzere Ausbildung der Querstege gewährleistet, dass zuverlässig nur jeweils ein Ei der Länge nach auf einem Quersteg in Querausrichtung angeordnet sein kann. Sofern sich ein Ei auf dem Quersteg des Bechers befindet, schließt die Seite dieses Ei kurz hinter dem vorderen Ende der Prallwand ab.

Es hat sich nämlich gezeigt, dass durch die -im Vergleich zum Stand der Technik- kürzere und breitere Ausbildung der Querstege eine Dosiereinrichtung nicht mehr erforderlich ist. Wenn ein Ei von dem Förderband heranrollt, bestehen folgende Möglichkeiten des weiteren Transports:
1) Der Becher ist noch nicht in der Stellung zur Aufnahme eines Eis. In diesem Fall stößt das Ei an das vordere breite Ende des Querstegs und wird durch das sich bewegende Transportband seitlich verdreht. Es wird durch den Quersteg so lange zurückgehalten, bis das Ei in den von unten aufsteigenden Becher einrollen kann. Sofern sich kein Ei in dem Becher befindet, rollt das Ei in die Ausnehmung des Bechers. Sofern sich bereits ein Ei an dieser Stelle befindet, rollt das wartende Ei an dem bereits im Becher befindlichen Ei ab, da das im Becher befindliche Ei nahezu mit der Vorderseite der Prallwand abschließt; eine Beschädigung der Eier wird so zuverlässig auch dann verhindert, wenn die Eier sich mit den empfindlichen, eher zerbrechenden Seiten berühren.
2) Der Becher ist in der Stellung zur Aufnahme eines Eis und leer. In diesem Fall rollt das Ei in den Becher und wird von diesem weiter transportiert.

Vorzugsweise ist zumindest das vordere Ende des Querstegs zwischen 0,8 und 1,5 cm breit. Die aus dem Stand der Technik bekannten Querstege sind dagegen gerade so dünn wie möglich gestaltet, um möglichst wenig Material einzusetzen und diese leichter auszubilden. Die Verbindung der im Vergleich zum Stand der Technik zumindest an ihrem vorderen Ende deutlich breiteren Querstege mit der geringfügigen Nachgiebigkeit der Becher in Erstreckungsrichtung der Querstege, die aufgrund des Schwingungsausschlags der Kette auftritt, verhindert wirkungsvoll das Zerbrechen der Eier. Dieses ist sogar dann der Fall, wenn die Eier mit Ihrer leichter zerbrechlichen Seite auf das vordere Ende der Querstege stoßen. Damit sind die Dosiereinrichtungen nicht mehr erforderlich und die Übergabe der Eier vom Förderband auf die becher erfolgt selbstregelnd allein durch die erfindungsgemäße Ausgestaltung der Becher.

Da der Quersteg an seiner Unterseite ebenfalls eine bogenförmige Ausnehmung aufweist, können zwei Becher dicht übereinander in dem Elevator angeordnet werden. Die bogenförmigen Ausnehmungen von jeweils zwei über- bzw. untereinander angeordneten Bechern umschließen von oben und unten zangenartig die Eier und verhindern so ein Herausfallen der Eier. Im Vergleich zum Stand der Technik bilden also zwei nebeneinander bzw. übereinander in der Hohlbolzenkette angeordnete Becher ein C-Profil, welches die Eier beim Transport kontinuierlich umschließt.

Diese Ausbildung ermöglicht es, die Bauhöhe der Becher um die Hälfte zu reduzieren, so dass diese doppelt so dicht an der Kette zueinander angeordnet werden können. Damit ist mit den erfindungsgemäßen Bechern die doppelte Transportkapazität des Elevators realisierbar.

Von besonderer Bedeutung ist die erfindungsgemäße Ausgestaltung, da durch diese das Herausfallen der Eier beim Umlenken an den Antriebszahnrädern bzw. Umlenkpunkten des Elevators verhindert wird. Beim Umlenken an den Antriebszahnrädern wird nämlich das zuvor auf einem unteren Becher auf dessen Oberseite in der Wölbung aufliegende Ei an die Unterseite des darüber liegenden Bechers übergeben. Die aufgrund der konkaven Wölbungen krallenartige Ausbildung der Becher gewährleistet auch beim Umlenken, wenn sich der Abstand zwischen den Bechern vergrößert, dass der äußere Spalt so klein bleibt, dass die Eier nicht herausfallen können.

Als besonders einfach hat es sich erwiesen, wenn die Ausnehmungen auf der Ober- und Unterseite des Bechers im wesentlichen gleich groß sind und die gleiche Geometrie aufweisen.

In einer bevorzugten Ausgestaltung ist der erfindungsgemäße Becher derart ausgebildet, dass der Längssteg eine lösbar mit den Endelementen verbindbare Stange aufweist, auf die der Quersteg aufsteckbar ist. Eine exakte horizontale Ausrichtung des Querstegs wird erreicht, wenn zwei, im wesentlichen parallel verlaufende Stangen vorgesehen sind und der Quersteg Führungslöcher aufweist, mit denen der Quersteg auf die Stangen aufsteckbar ist. Diese aufsteckbare Ausgestaltung ermöglicht gleichzeitig ein einfaches Auswechseln der Querstege. Die Befestigung der Stangen an den Endelementen erfolgt vorzugsweise durch Federelemente, wie z. B. Sprengringe, die für ein Auswechseln der Querstege zum Abnehmen der Endelemente einfach entfernbar sind.

Ein modularer Aufbau, durch den verschiedene Längen der Becher bzw. Aufnahmevorrichtungen nach Bedarf ausgestaltbar und aufbaubar sind, wird dann erreicht, wenn mehrere, mit Führungslöchern versehene Querstege zwischen den Endelementen angeordnet sind. Zur Realisierung verschieden langer Aufnahmevorrichtungen werden die für den jeweiligen Anwendungsfall benötigten Stangen mit einer bestimmten Länge an einem Endelement befestigt und die benötigte Anzahl von Querstegelementen wird auf die Stangen aufgeschoben. Das zweite Endelement wird dann auf die noch freien Stangenenden aufgesetzt und mit Sprengringen oder anderen Federelementen befestigt.

Es hat sich als besonders vorteilhaft erwiesen, dass die Querstege an den Führungslöchern Distanzhülsen aufweisen, welche die einzelnen Querstege bzw. Querstegmodule voneinander oder von den Verbindungsenden beabstanden. Auf diese Weise ergeben sich quer zur Längsrichtung der Aufnahmevorrichtung verlaufende Abstände zwischen den Querstegen. Diese Abstände sorgen zum einen für ein verbessertes Fixieren der Eier innerhalb der Aufnahmevorrichtung. Ferner können durch diese Abstände fingerartige Greifer von unten in die Becher eingreifen, um die Eier aus den Bechern zu entnehmen. Im einfachsten Fall geschieht dieses, indem die Greifer seitlich in die Förderlinie des Zugmittelgetriebes eingeschoben werden und der Becher von oben kommend an diesen Fingern vorbeiläuft. Dabei bleiben die Eier auf den Fingern liegen und werden so aus dem Becher entnommen.

Ein verbesserter Umlauf an den Antriebszahnrädern bzw. Umlenkzahnrädern für das Zugmittelgetriebe ist erreichbar, wenn der bzw. die Verbindungsstifte von der Mittelinie des Längsstegs versetzt in Erstreckungsrichtung des Querstegs bzw. der Querstege angeordnet sind. Auf diese Weise wird zum einen ermöglicht, die Becher näher aneinander an der Hohlbolzenkette zu befestigen, ohne dass sich die Becher beim Umlaufen der Umlenkrollen bzw. Antriebsräder verkanten. Zudem werden die hinteren -an der Umlenkrolle innen gelegenen- Enden der Querstege an den Umlenkrädern fast bis zur Berührung zusammengeführt, so dass ein zwischen zwei Bechern gehaltenes Ei bei der Übergabe von der Oberseite eines Bechers auf die Unterseite des daneben liegenden an den Umlenkrädern nicht herausfällt.

Es hat sich als besonders vorteilhaft erwiesen, wenn die Endelemente im wesentlichen rechteckige Endplatten aufweisen, an deren einem Ende versetzt von der Mitte ein Längssteg angeordnet ist und etwa in ihrer Mitte den Verbindungsstift aufweist.

Vorteilhafterweise sind sowohl die Endelemente als auch die Querstege bzw. Querstegmodule als Kunststoff-Spritzgußteile auszugestalten, da diese besonders kostengünstig fertigbar. Daneben weisen die gegenüber der aus dem Stand der Technik bekannten Ausführungsform der Aufnahmevorrichtung aus Metall ein geringeres Gewicht auf.

Die Erfindung ist in der Zeichnung anhand eines bevorzugten Ausführungsbeispiels dargestellt und im folgenden anhand der Figuren detailiert beschrieben. Es zeigen:
- Fig. 1: eine Seitenansicht eines erfindungsgemäßen Elevators mit daran befestigten Bechern und
- Fig. 2: eine Frontansicht einer Aufnahmevorrichtung (Becher).

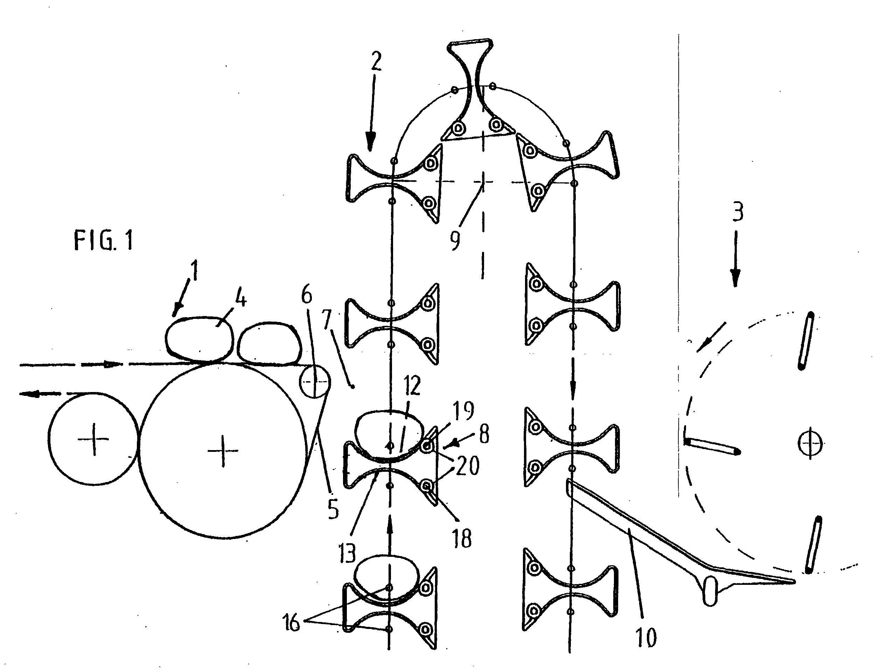

Wie Figur 1 zu entnehmen ist, besteht das Eier-Transportsystem im wesentlichen aus einem Förderer 1, einem Elevator 2 und einem Abnahmedosierer 3. Die Eier 4 werden auf dem Förderband 5 des Förderers 1 zu dem Elevator 2 gefördert. Der Förderer 1 und der Abnahmedosierer 3 sind bekannt und nicht Gegenstand dieser Erfindung.

Das Ende des Förderbands 5 ist in unmittelbarer nähe des Elevators 2 angeordnet. Die Eier 4 rollen von dem Ende des Förderbandes 5 über die Umlenkrolle 6 in einen Becher 8 des Elevators 2, sofern dieses nicht von dem vorderen Ende 23 eines Querstegs 11 oder einem in einem Becher 8 befindlichen Ei 4 daran gehindert werden. Die Eier 4 werden von den Bechern 8 von dem Elevator 2 über den oberen Umlenkpunkt 9 des Elevators 2 auf die dem Förderer 1 gegenüberliegende Seite transportiert und von den Fingern 10 des Abnahmedosierers 3 abgegriffen. Die Finger 10 greifen in Zwischenräume ein, die an den noch zu beschreibenden Bechern 8 vorgesehen sind, so dass ein gefördertes Ei auf der Schräge des Fingers 10 liegen bleibt und über die Schräge zu dem Abnahmedosierer 3 rollt.

Wie ferner Figur 1 zu entnehmen ist, sind die Querstege 11 der Becher 8 an der als Auflagefläche für ein Ei dienenden Oberseite mit einer bogenförmigen, im wesentlichen konkav - im eingebauten Zustand - nach unten verlaufenden Ausnehmung versehen, in die das Ei 4 einlegbar ist; die Ausnehmung weist also im wesentlichen die Geometrie der Seite eines Eis auf. Die Größe ist so ausgebildet, das ein Ei der Länge nach auf dem Quersteg 11 angeordnet werden kann.

Darüber hinaus ist der Quersteg 11 an seiner Unterseite mit einer weiteren Ausnehmung 13 versehen, die ebenfalls konkav an dem Quersteg 11 ausgebildet ist und in etwa die Geometrie einer Eiseite aufweist. Im vorliegenden Fall sind die Ausnehmungen 12 und 13 im wesentlichen gleich groß und weisen die gleiche Geometrie auf.

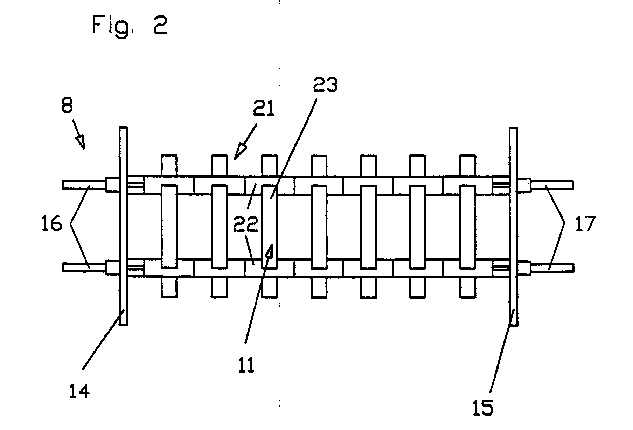

Der genaue Aufbau des Bechers 8 ist besonders gut aus Figur 2 ersichtlich, die eine Frontansicht auf den Becher 8 darstellt.

Der Becher 8 ist mit zwei als rechteckige Endplatten 14 und 15 ausgebildeten Endelementen versehen. An den voneinander weggerichteten Außenseiten der Endplatten 14 und 15 sind diese mit einstückig angeformten verbindungsstiften 16 und 17 versehen, mit denen sie in eine nicht dargestellte Hohlbolzenkette des Elevators 2 lösbar einsteckbar sind. Da Hohlbolzenketten auf beiden Seiten des Bechers 8 über die Verbindungsstifte 16 und 17 mit dem Becher 8 verbunden sind, wird der Becher 8 zwischen den Hohlbolzenketten fixiert gehalten. Die Befestigung in der Kette erfolgt verdrehsicher. Zudem federn die Becher durch den Schwingungsausschlag der Kette im geringen Maße. Dieses Federn verhindert neben der Prallwand 23 eine Beschädigung der Eier, wenn diese an die vordere Prallwand 23 eines Querstegs 11 heranrollen.

Die Endplatten 14 und 15 sind miteinander über einen Längssteg verbunden und durch diesen voneinander in einem festen Abstand beabstandet.

In der vorliegenden Ausführungsform wird der Längssteg über zwei Stangen 18 und 19 gebildet, die an den Endplatten 14 und 15 beispielsweise mit Federringen 20, die in an den Enden der Stangen 18 und 19 vorgesehene Nuten eingreifen, lösbar befestigbar sind. Auf die Stangen 18 und 19 sind mehrere Querstegmodule 21 aufgesteckt. Jedes dieser Querstegmodule 21 weist einen in der Figur 1 in der Seitenansicht dargestellten Quersteg 11 auf, an dessen im eingebauten Zustand zur Mitte des Elevators 2 gerichteten Ende Führungslöcher mit einstückig angeformten Distanzhülsen 22 angeformt sind. Mit diesen Distanzhülsen 22 werden die Querstegmodule 21 auf die Stangen 18 und 19 aufgesteckt. Die Distanzhülsen 22 bewirken, dass ein Querstegmodul 21 von dem angrenzenden Querstegmodul oder der Endplatte beabstandet ist, so dass sich zwischen den Querstegen 11 der aneinander anliegenden Querstegmodule 21 ein Zwischenraum entsteht. In diesen Zwischenraum kann dann der Finger 10 des Kollektors 3 eingreifen, um die Eier 4 aus dem Becher 8 zu entnehmen.

Die Becher 8 sind auf einfache Art und Weise in ihrer Länge an unterschiedlich große Elevatoren anpassbar, deren Hohlbolzenketten unterschiedlich voneinander beabstandet sind. Zu diesem Zweck werden die Stangen 18 und 19 durch Stangen anderer Länge ausgewechselt und es wird entsprechend der Länge die erforderliche Anzahl an Querstegmodulen 21 auf die Stangen aufgesteckt. Zum Schluss wird die zweite Endplatte mit den Federringen an den Stangen befestigt.

Selbstverständlich ist es auch möglich, die Querstege nicht als Querstegmodule, die auf Stangen aufsteckbar sind, auszubilden, sondern einstückig aus Kunststoff zu spritzen. Auch können diese direkt an den Endplatten angespritzt sein, so dass auf die Stangen verzichtet werden kann. Allerdings ist bei dieser Ausführungsform keine Änderung der Länge der Becher möglich.

Wie sich besonders gut Figur 1 entnehmen läßt, sind die Verbindungsstifte 16 und 17 von der Mittellinie des Längsstegs versetzt in Erstreckungsrichtung der Querstege 11 angeordnet. Die Mittellinie des Längsstegs verläuft parallel zu den Stangen 18 und 19, so dass die Verbindungsstifte 16 und 17 im eingebauten Zustand von dem Mittelpunkt des Elevators weggerichtet, also nach außen, von der Mittellinie des Längsstegs versetzt an den Endplatten 14 und 15 angeordnet sind. Im vorliegenden Fall sind die Verbindungsstifte 16 und 17 etwa in der Mitte der rechteckigen Endplatten 14 und 15 angeordnet. Wie besonders aus Figur 1 ersichtlich ist, stellt dieser Versatz der Verbindungsstifte 16 und 17 sicher, dass die hinteren Enden der Querstege 11 sich an den Umlenkrollen nahezu berühren, womit das Herausfallen der Eier zuverlässig verhindert wird und eine schonende Übergabe von einem Becher auf den nächsten realisierbar ist.

Durch die erfindungsgemäße Ausgestaltung der Becher wird nicht nur die Kapazität des Elevators bei gleich bleibender Kettengeschwindigkeit verdoppelt und die Beschädigung aufgrund der breiten Prallwand 23 wirksam verhindert, sondern es sind keine Dosiereinrichtungen zur Übergabe der Eier von dem Förderband auf den Elevator erforderlich. Die Übergabe der Eier von dem Förderband auf die Becher erfolgt selbstregelnd, wobei jeder Becher zur Beförderung eines Eis verwendet werden kann und nicht nur, wie bei den aus dem Stand der Technik bekannten Bechern, die einer Etage zugeordneten Becher.

### Bezugszeichenliste

- 1: Förderer
- 2: Elevator
- 3: Abnahmedosierer
- 4: Ei
- 5: Förderband
- 6: Umlenkrolle
- 7: Seil
- 8: Becher
- 9: Umlenkpunkt
- 10: Finger
- 11: Quersteg
- 12: Ausnehmung
- 13: Ausnehmung
- 14: Endplatte
- 15: Endplatte
- 16: Verbindungsstift
- 17: Verbindungsstift
- 18: Stange
- 19: Stange
- 20: Federring
- 21: Querstegmodul
- 22: Distanzhülse
- 23: vorderes Ende des Querstegs

## Patentansprüche

1. Mit einem Vertikalförderer (Elevator) (2) verbindbare Aufnahmevorrichtung (8) für Eier, die an den Vertikalförderer übergeben werden, mit Endelementen (14, 15), die an den voneinander weg gerichteten Außenseiten über Verbindungsmittel (16, 17) mit einem in dem vertikalförderer umlaufenden Zugmittelgetriebe verbindbar sind und miteinander über einen sich in Längserstreckungsrichtung der Aufnahmevorrichtung erstrekkenden Längssteg verbunden sind, an dem mindestens ein Quersteg (11) vorgesehen ist, der sich im wesentlichen quer zu dem Längssteg und von diesem nach vorne erstreckt, wobei an der als Auflagefläche für ein Ei dienenden Oberund der Unterseite des Querstegs eine bogenförmige, im wesentlichen konkave nach unten bzw. nach oben verlaufende Ausnehmung (12) vorgesehen ist, der Quersteg (11) etwa so lang ist wie ein Ei, **dadurch gekennzeichnet, dass** der Quersteg (11) zumindest an seinem vorderen Ende als verbreiterte Prallwand (23) ausgebildet ist, die eine Beschädigung der Eier im Betrieb verhindert und eine selbstregelnde Übergabe in den vertikalförderer ohne Dosiereinrichtung ermöglicht.

2. Aufnahmevorrichtung nach Anspruch 1, **dadurch gekennzeichnet, dass** die Ausnehmungen (12, 13) im wesentlichen gleich groß sind und die gleiche Geometrie aufweisen.

3. Aufnahmevorrichtung nach Anspruch 1 oder 2, **dadurch gekennzeichnet, dass** der Längssteg mindestens eine lösbar mit den Endelementen verbindbare stange (18, 19) aufweist, und dass der Quersteg (11) auf diese Stange (18, 19) aufsteckbar ist.

4. Aufnahmevorrichtung nach Anspruch 3, **dadurch gekennzeichnet, dass** der Längssteg zwei, im wesentlichen parallel verlaufende Stangen (18, 19) aufweist, und dass der Quersteg (11) Führungslöcher aufweist, mit denen der Quersteg (11) auf die Stangen (18, 19) aufsteckbar ist.

5. Aufnahmevorrichtung nach einem der Ansprüche 3 oder 4, **dadurch gekennzeichnet, dass** mehrere mit Führungslöchern versehene Querstege (11) mit Prallwänden (23) zwischen den Endelementen angeordnet sind.

6. Aufnahmevorrichtung nach Anspruch 5, **dadurch gekennzeichnet, dass** die Querstege (11) an den Führungslöchern Distanzhülsen (22) aufweisen, welche die einzelnen Querstege (11) voneinander oder von den Endelementen beabstanden.

7. Aufnahmevorrichtung nach einem der Ansprüche 1 bis 6, **dadurch gekennzeichnet, dass** die Verbindungsmittel (16, 17) von der Mittellinie des Längsstegs versetzt in Erstreckungsrichtung des Querstegs (11) angeordnet sind.

8. Aufnahmevorrichtung nach Anspruch 7, **dadurch gekennzeichnet, dass** die Endelemente im wesentlichen rechteckige Endplatten (14, 15) aufweisen, an deren einem Ende der Längssteg angeordnet ist und die etwa in ihrer Mitte als Verbindungsstifte (16, 17) ausgebildete verbindungselemente aufweisen.

9. Aufnahmevorrichtung nach einem der Ansprüche 5 bis 8, **dadurch gekennzeichnet, dass** die vordere Enden (23) der Querstege (11) so dick sind wie die Querstege (11).

10. Aufnahmevorrichtung nach Anspruch, **dadurch gekennzeichnet, dass** zumindest die vorderen Enden (23) der Querstege (11) zwischen 0,8 bis 1,5 cm breit sind.

11. Vertikalförderer (2), insbesondere Elevator eines Eier-Transportsystems, dessen Becher mindestens eine Aufnahmevorrichtung (8) nach einem der Ansprüche 1 bis 10 aufweisen.

## Claims

1. Receiving device (8) for eggs, which device can be connected to a vertical conveyor (elevator) (2), the eggs being transferred to the vertical conveyor, with end elements (14, 15) which can be connected at the outer sides, directed away from one another, via connection means (16, 17) to a traction drive, which circulates in the vertical conveyor, and are connected together via a longitudinal bar which extends in the direction of the longitudinal extent of the receiving device and at which at least one crossbar (11) is provided, the latter extending substantially transversely to the longitudinal bar and forward from the latter, wherein an arcuate recess (12), extending substantially in concave fashion downward and upward, is provided at the top side, serving as a bearing surface for an egg, and the underside of the crossbar, and the crossbar (11) is approximately as long as an egg, **characterised in that** the crossbar (11) is formed at least at its front end as a widened impact wall (23) which prevents the eggs from being damaged during operation and enables them to be transferred in self-regulating fashion into the vertical conveyer without a metering device.

2. Receiving device according to Claim 1, **characterised in that** the recesses (12, 13) are substantially of the same size and have the same geometry.

3. Receiving device according to Claim 1 or 2, **characterised in that** the longitudinal bar comprises at least one rod (18, 19) which can be releasably connected to the end elements, and that the crossbar (11) can be placed on this rod (18, 19).

4. Receiving device according to Claim 3, **characterised in that** the longitudinal bar comprises two rods (18, 19) which extend substantially in parallel, and that the crossbar (11) comprises guide holes by means of which the crossbar (11) can be placed on the rods (18, 19).

5. Receiving device according to either of Claims 3 and 4, **characterised in that** a plurality of crossbars (11), provided with guide holes, with impact walls (23) are disposed between the end elements.

6. Receiving device according to Claim 5, **characterised in that** the crossbars (11) comprise at the guide holes distance sleeves (22) which space the individual crossbars apart or from the end elements.

7. Receiving device according to any one of Claims 1 to 6, **characterised in that** the connection means (16, 17) are disposed so as to be staggered away from the centre line of the longitudinal bar in the direction in which the crossbar (11) extends.

8. Receiving device according to Claim 7, **characterised in that** the end elements comprise substantially rectangular end plates (14, 15), at one end of which the longitudinal bar is disposed and which comprise approximately in their centre connection elements formed as connection pins (16, 17).

9. Receiving device according to any one of Claims 5 to 8, **characterised in that** the front ends (23) of the crossbars (11) are as thick as the crossbars (11).

10. Receiving device according to Claim 9, **characterised in that** at least the front ends (23) of the crossbars (11) are between 0.8 and 1.5 cm wide.

11. Vertical conveyor (2), especially an elevator of an egg transport system, the buckets of which comprise at least one receiving device (8) according to any one of Claims 1 to 10.

## Revendications

1. Dispositif récepteur (8) d'oeufs pouvant être relié avec un convoyeur vertical (élévateur) (2), les oeufs étant transmis au convoyeur vertical, avec des éléments d'extrémité (14, 15), qui peuvent être reliés sur les côtés extérieurs s'écartant l'un de l'autre par l'intermédiaire de moyens de liaison (16, 17) avec un réducteur de mécanisme de traction s'étendant dans le sens circulaire dans le convoyeur vertical et qui sont reliés entre eux par une entretoise longitudinale s'étendant dans le sens d'extension longitudinale du dispositif récepteur, sur laquelle est prévue au moins une traverse (11) qui s'étend sensiblement dans le sens transversal par rapport à l'entretoise longitudinale et à partir de celle-ci vers l'avant, un évidement (12) en forme d'arc s'étendant de manière sensiblement concave vers le bas et/ou vers le haut étant prévu sur le côté supérieur et sur le côté inférieur de la traverse servant de surface d'appui pour un oeuf et la traverse (11) ayant approximativement la longueur d'un oeuf, **caractérisé en ce qu'**au moins à son extrémité avant la traverse (11) est configurée comme paroi d'impact élargie (23), qui évite une détérioration des oeufs durant le fonctionnement et qui permet une transmission autorégulatrice dans le convoyeur vertical sans qu'une installation de dosage ne soit nécessaire.

2. Dispositif récepteur selon la revendication 1, **caractérisé en ce que** les évidements (12, 13) ont sensiblement la même taille et la même géométrie.

3. Dispositif récepteur selon la revendication 1 ou 2, **caractérisé en ce que** l'entretoise longitudinale comprend au moins une barre (18, 19) pouvant être reliée de manière amovible avec les éléments d'extrémité et **en ce que** ce que la traverse (11) peut être enfichée sur cette barre (18, 19).

4. Dispositif récepteur selon la revendication 3, **caractérisé en ce que** l'entretoise longitudinale comprend deux barres (18, 19) s'étendant sensiblement en parallèle et **en ce que** la traverse (11) comprend des trous de guidage avec lesquels la traverse (11) peut être enfichée sur les barres (18, 19).

5. Dispositif récepteur selon l'une quelconque des revendications 3 ou 4, **caractérisé en ce que** plusieurs traverses (11) avec des parois d'impact (23) munies de trous de guidage sont disposées entre les éléments d'extrémité.

6. Dispositif récepteur selon la revendication 5, **caractérisé en ce que** les traverses (11) comprennent sur les trous de guidage des douilles d'écartement (22), qui réalisent un espacement entre les différentes traverses (11) ou entre les différentes traverses et les éléments d'extrémité.

7. Dispositif récepteur selon l'une quelconque des revendications 1 à 6, **caractérisé en ce que** les moyens de liaison (16, 17) sont disposés avec un décalage par rapport à la ligne médiane de l'entretoise longitudinale dans la direction d'extension de la traverse (11).

8. Dispositif récepteur selon la revendication 7, **caractérisé en ce que** les éléments d'extrémité comprennent des plaques d'extrémité sensiblement carrées (14, 15) à l'une des extrémités desquelles est disposée l'entretoise longitudinale et qui comprennent environ sur leur centre des éléments de liaison configurés comme broches de liaison (16, 17).

9. Dispositif récepteur selon l'une quelconque des revendications 5 à 8, **caractérisé en ce que** les extrémités avant (23) des traverses (11) ont la même épaisseur que les traverses (11).

10. Dispositif récepteur selon la revendication 9, **caractérisé en ce qu'**au moins les extrémités avant (23) des traverses (11) ont une largeur située entre 0,8 et 1,5 cm.

11. Convoyeur vertical (1), en particulier élévateur, d'un système de transport d'oeufs dont les godets comprennent au moins un dispositif récepteur (8) selon l'une des revendications 1 à 10.
